Europäisches Patentamt

European Patent Office

Office européen des brevets

(11) Veröffentlichungsnummer: **0 222 727**
**B1**

## EUROPÄISCHE PATENTSCHRIFT

(45) Veröffentlichungstag der Patentschrift:
26.07.89

(51) Int. Cl.⁴: **H 01 H 9/56**

(21) Anmeldenummer: **86890224.8**

(22) Anmeldetag: **05.08.86**

(54) **Einrichtung zum Minimieren von Netzrückwirkungen beim Ein- und Ausschalten von induktiven und kapazitiven Elementen im Hochspannungsnetz.**

(30) Priorität: **10.09.85 AT 2641/85**

(43) Veröffentlichungstag der Anmeldung:
**20.05.87 Patentblatt 87/21**

(45) Bekanntmachung des Hinweises auf die Patenterteilung:
**26.07.89 Patentblatt 89/30**

(84) Benannte Vertragsstaaten:
**BE CH DE FR GB IT LI LU NL SE**

(56) Entgegenhaltungen:
**EP-A- 0 034 448**
**CH-A- 443 443**
**FR-A- 2 288 381**
**FR-A- 2 488 036**
**US-A- 3 707 634**
**US-A- 3 946 277**

(73) Patentinhaber: **Sprecher Energie Österreich Gesellschaft m.b.H., Franckstrasse 51, A-4020 Linz (AT)**

(72) Erfinder: **Richter, Walter c/o Österr. Elektr.-Wirtschafts-AG, Am Hof 6A, A-1011 Wien (AT)**

(74) Vertreter: **Rossboth, Werner Heinz, c/o Sprecher Energie Österreich Gesellschaft m.b.H. Franckstrasse 51, A-4020 Linz (AT)**

## Beschreibung

Die Erfindung bezieht sich auf eine Einrichtung zum gesteuerten Ein- und/oder Ausschalten von induktiven und/oder kapazitiven Elementen im Wechselspannungsnetz hoher Spannung zum Minimieren von Netzrückwirkungen, bei der einem Ein- oder Mehrphasen-Leistungsschalter über eine Torschaltung und eine von der wechselförmigen Hochspannung gesteuerte Detektorschaltung ein Schaltsignal zugeführt wird, wobei in jedem Schaltsignalweg zum Leistungsschalter eine Torschaltung vorgesehen ist.

Bekanntlich sind bei Reaktanzen oder allgemein bei Impedanzen mit einem Reaktanzanteil Strom und Spannung in der Phase verschoben. Dies kann insbesondere beim Einschalten derartiger Elemente zu Einschaltstromstössen bzw. zu Rückwirkungen auf das speisende Netz führen. Beispielsweise ist beim Einschalten eines Transformators der magnetische Fluß und damit der Strom um etwa 90° gegenüber der Spannung nacheilend phasenverschoben. Besitzt der Eisenkern des Transformators keinen remanenten Magnetismus, so entspricht beim Einschalten des Transformators im Spannungsmaximum der Vorgang dem stationären Zustand. In der Regel weist jedoch der Transformator beim Einschalten einen remanenten Fluß auf, d.h. der von der Spannung geforderte Fluß beginnt mit einem durch die Remanenz hervorgerufenen anderen Wert.

Im Falle der Einschaltung im Spannungsmaximum erfolgt eine Verlagerung des resultierenden Flusses nur um den Betrag der Remanenz, und es kommt zu keinen Sättigungserscheinungen bzw. es werden nur kleine Einschaltströme bewirkt.

Erfolgt hingegen das Einschalten des Transformators im Spannungs-Nulldurchgang, so erfolgt eine gleichstrommäßige Verlagerung des entstehenden Flusses um den Scheitelwert des der Spannung entsprechenden Betrages des Flusses, und diese Flußverlagerung wird durch eine bestehende Remanenz verstärkt, wenn die Remanenz in Gegenrichtung liegt, bzw. geschwächt, wenn sie in gleicher Richtung liegt. Das erste Maximum des so verlagerten Wechselflusses erreicht eine Amplitude von etwa zweifachem Normalfluß zuzüglich remanentem Fluß. Das Abklingen des Gleichstromflußanteiles erfolgt sehr langsam und weist bei modernen Transformatoren Zeitkonstanten von vielen Sekunden auf.

Der Einschaltzeitpunkt ist daher von wesentlicher Bedeutung, weil durch die vom Einschaltzeitpunkt (und von der Größe und Lage der Remanenz) abhängige Größe des Flusses Sättigungsinduktionen bewirkt werden können, die zu den bekannten Nachteilen, wie überhöhte Einschaltstromstöße und Verzerrung der Netzspannung, führen. Mit Spannungsabfällen im Netz, Rückwirkungen auf andere Netze und vor allem auf Verbraucher muß dann gerechnet werden.

Ähnliche Überlegungen gelten nicht nur für induktive Elemente, z.B. Transformatoren, sondern auch für kapazitive Elemente, z.B. Kondensatorbatterien, leerlaufende Leitungen und für Filterkreise sowie Leitungen im Bereich von Gleichstromkurzkupplungen, da deren Unterspannungsetzung auch schon zu Kippungen der dort eingebauten Wechselrichter geführt hat. Auch hier kann somit die Wahl des Schaltzeitpunktes von Bedeutung sein, wobei auch noch zu erwähnen ist, daß durch die Wahl des Zeitpunktes für den Schaltvorgang etwaige sich ergebende Resonanzen zwischen kapatitiven und induktiven Elementen des Netzes günstig beeinflußt werden können.

Bekannte Einrichtungen zum Schalten von induktiven Verbrauchern oder Kondensatoren beim Stromnulldurchgang mit einer Zeitverzögerungseinrichtung zur Berücksichtigung der Ansprechzeit des Schaltrelais sind relativ ungenau, insbesondere wenn die die Dekektorschaltung steuernde Wechselspannung stark vom idealen Sinusverlauf abweicht.

Zur Begrenzung von Einschaltstromstößen ist es bekannt, an die zum Einschalten verwendeten Leistungsschalter vorübergehend einen Einschaltwiderstand zu schalten. Wenn dieser Einschaltwiderstand seine Stromstoß-Dämpfung erfüllt hat, wird er wieder weggeschaltet. Diese bekannten Lösungen mit gesonderten Einschaltwiderständen sind jedoch aufwendig und bei manchen Hochspannungs-Leistungsschaltern schwer zu verwirklichen.

Aus der EP-A-0 034 448 ist eine Vorrichtung zum gesteuerten Schalten der Kontakte elektromagnetischer Relais mit einer Verzögerungseinrichtung bekannt, um die Trägheit der Kontakte zu kompensieren und im Nulldurchgang oder nahe dem Nulldurchgang schalten zu können. Durch die Vorrichtung soll der Verschleiß der Kontakte durch Lichtbögen und Funken vermindert werden. Die Verzögerungseinrichtung ist dabei so ausgebildet, daß sie die sich unterscheidenden Trägheiten der Kontakte beim Einschalten und Ausschalten der Spule des elektromagnetischen Relais ausgleichen kann. Die Kontakte der elektromagnetischen Relais schalten automatisch die Anzapfungen eines Spartransformators zur Stabilisierung der Wechselspannung für einen Elektromotor, wobei eine Genauigkeit des Schaltzeitpunktes im Nulldurchgang der Wechselspannung von + 2 ms erreichbar ist.

In der US-A-3 707 634 wird eine Einrichtung zur Verlängerung der Lebensdauer von Relaiskontakten beschrieben. Die Relaisspule wird über einen elektronischen Schaltkreis angeregt, welcher bewirkt, daß die Relaiskontakte eine bestimmte Anzahl bei positiver Welle und eine bestimmte Anzahl bei negativer Welle der Wechselspannung schalten. Dadurch soll ein einseitiges Wandern des Kontaktmaterials von einem zum anderen Relaiskontakt vermieden werden.

Um günstige Einschaltstromstöße beim Einschalten von Schweißtransformatoren zu erhalten, wird in der FR-A-2 288 381 vorgeschlagen, über antiparallelgeschaltete Thyristoren gesteuert einzuschalten. Über einen torusförmigen Magnetkern wird die Stromflußrichtung vor dem Unterspannungsetzen des Schweißtransformators gespeichert und dazu verwendet, um zu bestimmen, welcher der beiden Thyristoren als erster getriggert werden soll.

Es sind aus der CH-A-443 443 auch schon Einrichtungen zum gesteuerten Ausschalten von Hochspannungs-Leistungsschaltern vorgeschlagen worden, die mit einer von der Hochspannung gesteuerten Detektorschaltung und elektronischen Schaltkomponenten arbeiten. Eine ähnliche Einrichtung zum Ausschalten eines Leistungsschalters im Nulldurchgang des Laststromes ist aus der US-A-3 946 277 bekannt.

Aus der FR-A-2 488 036, die den nächstkommenden Stand der Technik bildet, ist eine Einrichtung zur Betätigung eines elektromagnetischen Relais zum Schalten eines Wechselstromkreises bekannt. Über eine von der Wechselspannung gesteuerte Detektorschaltung und einen Mikro-Computer werden die Relaiskontakte etwa im Nulldurchgang des Stromes geöffnet und im Nulldurchgang der Spannung geschlossen, um den Verschleiß der Relaiskontakte herabzusetzen. Die mit der Einrichtung erzielbare Genauigkeit des Schaltzeitpunktes ist jedoch relativ bescheiden und reicht insbesondere zum gesteuerten Einschalten von induktiven Elementen im Wechselspannungsnetz hoher Spannung nicht aus.

Aus keiner der beschriebenen Lösungen geht eine Einrichtung zum gesteuerten Ein- und/oder Ausschalten von induktiven und/oder kapazitiven Elementen im Hochspannungsnetz hervor, bei der durch Staffelung der Schaltzeitpunkte eine Minimierung von Netzrückwirkungen erzielbar ist.

Es ist daher Ziel der Erfindung, eine Einrichtung der eingangs angegebenen Art zu schaffen, mit der auf einfache Weise der jeweils günstigste Schaltzeitpunkt phasenweise gewählt und festgelegt werden kann, wobei überdies der Schaltzeitpunkt mit der erforderlichen Genauigkeit, beispielsweise kleiner $\pm 1$ ms, festsetzbar sein soll. Dabei sollen auch die bei den herkömmlichen Leistungsschaltern vorhandenen, aufgrund von Toleranzen, Arbeitstemperaturen, Alterungserscheinungen u.dgl. variierenden Schaltverzögerungen mit berücksichtigt werden können.

Dies wird dadurch erreicht, daß jede Torschaltung durch einen Thyristor gebildet ist, dessen Gateelektrode an je eine mit einer Detektorschaltung verbundene, zur individuellen Festlegung eines ausgewählten Schaltzeitpunktes einstellbare Zeitstufe angeschlossen ist.

Ein genaues Schalten des Leistungsschalters im optimalen Zeitpunkt wird damit ermöglicht, wobei dieser optimale Zeitpunkt, basierend auf der Phasenlage der zu- oder abzuschaltenden Wechselspannung, wie sie durch die Detektorschaltung erkannt wird, je nach den gegebenen Umständen mit Hilfe der Zeitstufe eingestellt werden kann. Diese Zeitstufe steuert dann die Torschaltung, um das angelegte Schaltsignal, etwa ein Einschalt-Befehlssignal zum Leistungsschalter, durchzuschalten. Dabei kann die Zeitstufe unter Berücksichtigung der Schaltverzögerung des Leistungsschalters derart eingestellt werden, daß immer im Spannungsmaximum bzw. Stromnulldurchgang geschaltet wird, was in der Regel sowohl für kapazitive als auch für induktive Elemente günstig ist. Eine Ausnahme bilden hier nur Drehstrom-Transformatoren , bei denen der günstigste Schaltzeitpunkt auch von der jeweiligen Schaltgruppe und Steuerpunktsbehandlung abhängt. Die erfindungsgemäße Einrichtung ermöglicht auch hier, die einzelnen Phasen getrennt zu definierten Zeitpunkten zu schalten, und im Falle einer starren Sternpunktsverbindung kann der Einschaltvorgang beispielsweise so optimiert werden, daß in keinem Schenkel eine zusätzliche Gleichflußkomponente auftritt und die Kernflüsse sofort ihren stationären Wert erreichen. Dazu wird in diesem Fall zuerst eine Phase zum Zeitpunkt ihres Spannungsmaximums an das Netz geschaltet, dann die beiden übrigen Phasen gleichzeitig genau eine Viertelperiode später (5 ms später). Im Falle eines freien Sternpunktes ist die optimale Schaltfolge so, daß zuerst zwei Phasen zum Zeitpunkt des Spannungsmaximums der zwischen ihnen liegenden verketteten Spannung zugeschaltet werden und genau nach einer Viertelperiode (5 ms) die dritte Phase. Es ist somit ersichtlich, daß die Wahl des jeweiligen optimalen Schaltzeitpunktes von den ein- bzw. auszuschaltenden Elementen abhängig ist, daß aber in jedem Fall ein derartiger optimaler Schaltzeitpunkt eruierbar ist und mit der erfindungsgemäßen Einrichtung bzw. der dabei vorgesehenen Zeitstufe (im Fall von Mehrphasensystemen mit den Zeitstufen) eingestellt werden kann.

Die Torschaltungen werden durch Thyristoren gebildet, die auf ein von der Steuersignalschaltung an seinem Steuereingang ankommendes Steuersignal ein Durchschalten des angelegten Schaltsignals (etwa eines Einschaltbefehlssignals) zum Leistungsschalter (etwa einer Einschaltspule eines Mehrphasen-Leistungsschalters) ermöglichen. Um dabei zu verhindern, daß der Thyristor zur Zündung nur einen Magerimpuls zugeführt erhält, wie etwa, wenn der Zündimpuls gerade abfällt, wenn das Schaltsignal auftritt, ist es von Vorteil, wenn zwischen jeder einstellbaren Zeitstufe und zugeordnetem Thyristor eine Zündimpulsfreigabeschaltung, z.B. eine Gatterschaltung oder eine Kippstufe, vorgesehen ist, der an einem Steuereingang das Schaltsignal, insbesondere mit Zeitverzögerung, zuführbar ist. Damit kann erreicht werden, daß die Gateansteuerung für den Thyristor nur mit der Flanke des eintreffenden Schaltsignals freigegeben wird. Gegebenenfalls kann dabei der Impulsfreigabeschaltung das Schaltsignal über ein gesondertes Verzögerungsglied, etwa mit einer Verzögerungszeit von 5 ms, zugeführt werden, um so die nachteiligen Auswirkungen von Prellungen in der Kontaktgabe bzw. damit einhergehende Schwingungen im Schaltsignal zu dessen Beginn auszuschalten.

Zwischen dem Thyristor und der Zeitstufe bzw. der Zündimpulsfreigabeschaltung kann ein Optokoppler zur galvanischen Trennung der Steuersignalschaltung vom Thyristor vorgesehen sein.

Um auch bei einem etwaigen Ausfall der Steuersignalschaltung, etwa bei einem Spannungsausfall, ein Betätigen des Leistungsschalters durch das angelegte Schaltsignal sicherzustellen, ist es vorteilhaft, wenn alle Torschaltungen durch ein Zeitrelais überbrückt sind, dessen Ansprechverzögerung größer ist, als die Zeitverzögerung der einstellbaren Zeitstufen. Soferne daher bei einer derartigen Ausführung die Torschaltung nicht rechtzeitig aufgrund eines dem Steuereingang zuzuführenden Steuersignals (Zündimpulses) geöffnet bzw. durchgeschaltet hat, wird das Schaltsignal nach der Verzögerungszeit des Überbrückungs-Zeitrelais, die etwa im Bereich von 30 ms bis 50 ms liegen kann, direkt an den Leistungsschalter angelegt. Das Zeitrelais dient somit als Sicherheitseinrichtung, und es ermöglicht auch ein Zuschalten des Leistungsschalters im spannungslosen Zustand.

Die Detektorschaltung hat die Funktion, ein für die Phasenlage der als Bezugsgröße für die Ableitung des Steuersignals gewählten Wechselspannung (Synchronisierspannung bzw. Sammelschienenspannung) charakteristisches Signal (Impulssignal) abzugeben. Dazu könnte beispielsweise ein Spitzenwertdetektor eingesetzt werden, der bei Erreichen des Spannungsmaximums einen Impuls abgibt. Um jedoch eine besonders genaue Einstellung des Schaltzeitpunktes zu ermöglichen, ist es von besonderem Vorteil, wenn die mit der Wechselspannung oder einer synchronen Meßspannung gekoppelte Detektorschaltung durch einen Spannungs-Nullpunktsdiskriminator gebildet ist.

Dabei ist es weiters günstig, wenn dem Spannungs-Nullpunktsdiskriminator eine Auswahlschaltung zur selektiven Durchschaltung von Diskriminatorimpulsen bei einem Spannungs-Nulldurchgang mit ansteigender oder abfallender Flanke nachgeschaltet ist. Mit Hilfe einer derartiger Auswahlschaltung wird ermöglicht, daß das vom Diskriminator von der anstehenden Netzspannung abgeleitete Binärsignal immer nur in einer Flankenrichtung weiter ausgewertet wird. Dabei kann beim Anschalten von induktiven Elementen, wenn von diesen die Remanenzrichtung erfaßt wurde bzw. bekannt ist, jene Flanke ausgewählt werden, die der Richtung der Remanenz entspricht. Bei Elementen ohne Remanenz, z.B. bei Luftdrosseln oder kapazitiven Elementen, ist die Wahl vollkommen frei. In diesem Fall kann die Auswahlschaltung überbrückt werden, oder sie erhält an einem Steuereingang ein festes Signal zugeführt, um z.B. bei jedem positiven Nulldurchgang das Impulssignal des Nullpunktsdiskriminators durchzuschalten.

Bei Mehrphasensystemen, wie insbesondere Drehstrom, werden in der Regel für jede Phase entsprechende Steuersignalschaltungen und Torschaltungen vorgesehen, um so für jede Phase gesondert die entsprechende Schaltspule des Leistungsschalters anzusteuern. Zur Schaltungsvereinfachung kann bei Mehrphasensystemen jedoch auch nur ein Spannungs-Nullpunktsdiskriminator vorgesehen sein, der mit einer Phase koppelbar ist, und dem fest eingestellte Zeitstufen entsprechend den weiteren Phasen nachgeschaltet sind, wogegen für jede Phase eine Torschaltung mit zugehöriger frei einstellbarer Zeitstufe vorgesehen ist.

Um der Auswahlschaltung eine Information über die Polarität der Remanenz im Fall von induktiven Elementen mit Eisenkern für den Einschaltvorgang zu liefern, kann eine mit der durch den Leistungsschalter geschaltete Abzweigspannung bzw. dem Abzweigstrom koppelbare Speicherschaltung zur Speicherung der Polarität der letzten Halbwelle vor dem Abschalten des Leistungsschalters vorgesehen sein, deren Ausgang mit einem Steuereingang der Auswahlschaltung verbunden ist.

Wie bereits erwähnt, wird durch die erfindungsgemäße Einrichtung auch ermöglicht, bei Mehrphasensystemen die einzelnen Phasen getrennt zu definierten Zeitpunkten zu schalten, um eine Optimierung insbesondere des Einschaltvorganges zu erreichen.

Beim Einschalten von Dreiphasen-Transformatoren mit starrer Sternpunkterdung unter Minimierung des Einschaltstromstoßes hat es sich als besonders günstig erwiesen, wenn mit den einstellbaren Zeitstufen der gemeinsame Schaltzeitpunkt für zwei Phasen eine Viertelperiode der Wechselspannungsfrequenz nach dem Schaltzeitpunkt der ersten Phase festgelegt ist, welcher seinerseits mit dem Zeitpunkt des Spannungsmaximums zusammenfallend gewählt ist.

Betrachtet man nämlich den Verlauf der Schenkelflüsse im stationären Zustand bei symmetrischer dreiphasiger Anspeisung, erkennt man, daß die Augenblickswerte der Kernflüsse zu genau diesem Zeitpunkt denselben Wert haben wie bei der einphasigen Anspeisung. Schaltet man nun die erste Phase in ihrem Spannungsmaximum zu, tritt die erste derartige Übereinstimmung genau eine Viertelperiode (5 ms bei 50 Hz) nach dem Einschalten auf. Wenn also zu diesem Zeitpunkt die beiden übrigen Phasen dazugeschaltet werden, kann die Verteilung der Flüsse auf die Kernschenkel des Dreiphasen-Transformators sofort und ohne Ausgleichsvorgang in den stationären Zustand übergehen.

Im Falle eines offenen oder freien Sternpunktes ist es nicht sinnvoll, zunächst nur eine Phase zuzuschalten. Vielmehr müssen zuerst zwei Phasen zum Zeitpunkt des Spannungsmaximums der zwischen ihnen liegenden verketteten Spannung zugeschaltet werden. Eine Viertelperiode danach weisen die Augenblickswerte der Kernflüsse denselben Wert wie bei der einphasigen Anspeisung auf.

Beim Einschalten von Dreiphasen-Transformatoren mit offenem Sternpunkt unter Minimierung des Einschaltstromstoßes ist daher mit den einstellbaren Zeitstufen der gemeinsame Schaltzeitpunkt für zwei Phasen mit dem Zeitpunkt des Spannungsmaximums der zwischen diesen Phasen liegenden verketteten Spannung zusammenfallend festgelegt, wogegen der Schaltzeitpunkt für die dritte Phase eine Viertelperiode der Wechselspannungsfrequenz nach dem gemeinsamen Schaltzeitpunkt der ersten zwei Phasen festgelegt ist.

Die Erfindung wird nachstehend an Hand von Ausführungsbeispielen unter Bezugnahme auf die Zeichnung näher erläutert. Es zeigen:

Fig. 1 ein allgemeines Blockschaltbild zur Veranschaulichung der prinzipiellen Funktionsweise der erfindungsgemäßen Einrichtung bei einem Einphasen-System,

Fig. 2 ein Blockschaltbild einer Einrichtung zum Einschalten von induktiven und/oder kapazitiven Elementen im Dreiphasen-Hochspannungsnetz mit phasenweiser Verzögerung des Einschaltsignals und

Fig. 3 das Blockschaltbild einer gegenüber Fig. 2 modifizierten Einrichtung, die sowohl zum gesteuerten Ausschalten als auch zum gesteuerte Einschalten vorgesehen ist.

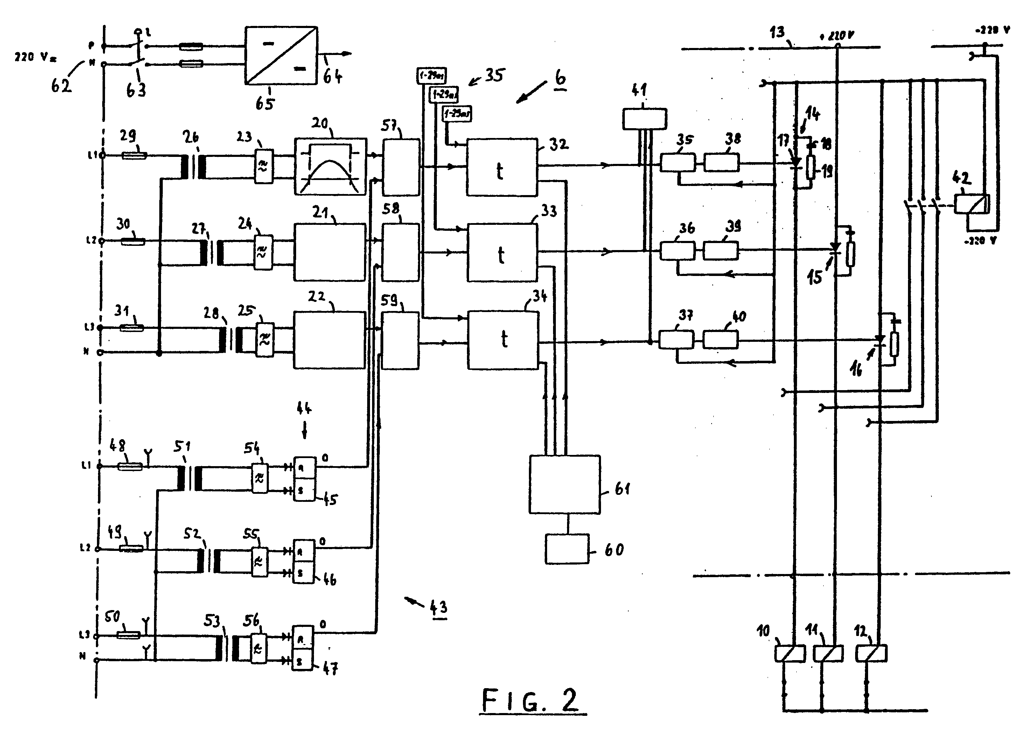

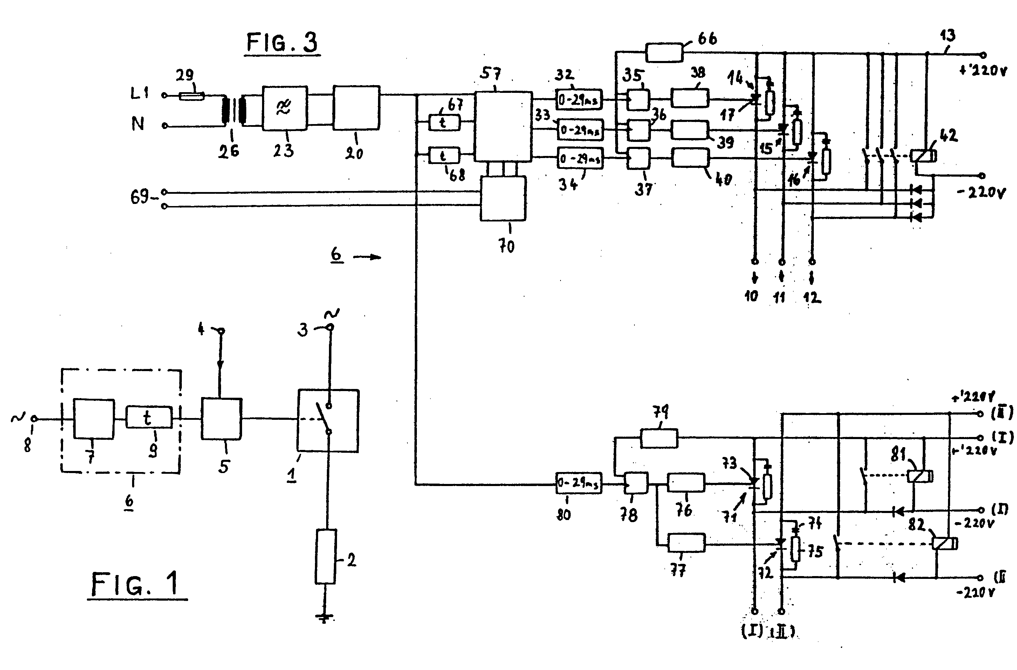

In Fig. 1 ist ein Schalter 1 dargestellt, über den eine geerdete Last 2 mit Reaktanzteil, beispielsweise ein induktives oder kapazitives Element wie eine Drossel oder eine Kondensatorbatterie, an eine hohe Wechselspannung zu- oder abgeschaltet wird. Während die Wechselspannung am Punkt 3 anliegt, wird das entsprechende Ein- oder Ausschaltsignal für den Schalter 1 am Punkt 4 zugeführt. Das Schaltsignal am Punkt 4 wird jedoch nicht direkt an den Schalter 1 angelegt, sondern über eine Torschaltung 5, deren einen Steuereingang ein über eine Steuersignalschaltung 6 von der Wechselspannung oder einer synchronen Wechselspannung abgeleitetes Steuersignal zugeführt wird. Die Steuersignalschaltung 6 enthält dabei eine Detektorschaltung 7, die am Punkt 8 mit der als Meßspannung dienenden Wechselspannung gekoppelt wird und die abhängig von dieser Spannung zu bestimmten Zeitpunkten periodisch Impulse an eine Zeitstufe 9 abgibt. Mit dieser Zeitstufe 9 werden die zugeführten Impulse entsprechend verzögert, um so einen von der Lage der Wechselspannung einerseits, als auch von der dem Schalter 1 inhärenten Schaltverzögerung anderseits, abhängigen optimalen Zeitpunkt zum Durchschalten des Schaltersignals 4 mittels der Torschaltung 5 und somit zum Einschalten oder Ausschaltern der Last 2 einzustellen. In der Regel liegt dieser optimale Schaltzeitpunkt im Spannungsmaximum der Wechselspannung am Punkt 3, was zufolge der Phasenverschiebung um ungefähr 90° bei induktiven bzw. kapazitiven Elementen einem Stromnulldurchgang entspricht. Eine Ausnahme bilden hier Transformatoren in Dreiphasensystemen, da dort der optimale Schaltzeitpunkt auch von der Schaltgruppe und Sternpunktsbehandlung abhängig ist.

Das erfindungsgemässe Schaltprinzip kann grundsätzlich sowohl beim Einschalten, als auch beim Ausschalten angewandt werden. Dabei werden vor allem beim Einschalten wesentliche Vorteile ermöglicht. So werden Einschaltstromstöße und Verzerrungen der Netzspannung vermieden oder zumindest reduziert und Rückwirkungen auf andere Netze und Verbraucher minimiert. Auch können durch geeignete Einstellung des Einschaltzeitpunktes etwaige Resonanzen, die zwischen kapazitiven und induktiven Elementen entstehen, vermindert werden.

In Mehrphasensystemen werden üblicherweise Leistungsschalter mit gesonderten Einschaltspulen für die einzelnen Phasen verwendet. Die Einschaltspulen geben dabei, beispielsweise bei Vorliegen von Einschaltbefehlssignalen, Antriebe frei, um die eigentliche Schalterbetätigung zu bewirken. In solchen Fällen ist es von besonderem Vorteil, daß jede Phase eine eigene Torschaltung enthält, über die das entsprechende Schaltsignal an die zugehörige Spule des Leistungsschalters angelegt wird, wobei auch ein phasenweise gesondertes Schalten mit Hilfe von eigenen Zeitstufen sowie gegebenenfalls auch eigenen Detektorschaltungen möglich ist. In Fig. 2 ist ein Ausführungsbeispiel einer Einrichtung zum Einschalten von induktiven und/oder kapazitiven Elementen in einem Dreiphasensystem mit phasenweiser Verzögerung des Einschaltbefehlssignals gezeichnet. Den drei Einschaltspulen 10, 11 und 12, eines Leistungsschalters wird ein über eine Leitung 13 ankommendes Einschaltbefehlssignal zugeführt. Jeder Einschaltspule 10, 11 bzw. 12 ist eine gesonderte Torschaltung 14, 15 bzw. 16 vorgeschaltet, wobei jede dieser Torschaltungen, wie z.B. bei der Torschaltung 14 dargestellt ist, aus einem Thyristor 17 besteht, dem die Serienschaltung eines Kondensators 18 und eines Widerstandes 19 parallelgeschatet ist. Jeder Thyristor 17 entnimmt somit seine Kathoden Anoden-Spannung dem ankommenden Einschaltbefehlssignal.

Jede der drei Torschaltungen 14, 15 und 16 erhält von einer Steuersignalschaltung 6 gemäss Fig. 1, welche jedoch mit drei Signalwegen ausgeführt ist, ein entsprechendes Steuersignal (Zündimpuls) zugeführt, um so das Einschaltbefehlssignal zur jeweiligen Einschaltspule 10, 11 und 12 selektiv durchzuschalten. Im einzelnen sind dabei für jeden Signalweg gesondert Spannungsdiskriminatoren 20, 21 bzw. 22 vorgesehen, die je über einen Eingangsfilter 23, 24 bzw. 25 und einen Wandler 26, 27 bzw. 28 an die entsprechende Phase der ausgewählten Synchronisierspannung bzw. Sammelschienenspannung L1, L2, L3, N angeschlossen sind. Dabei können den Wandlern 26, 27, 28 auch Sicherungen 29, 30 bzw. 31 vorgeschaltet sein. Bei den Eingangsfiltern 23, 24, 25 handelt es sich beispielsweise um auf eine Frequenz von 50 Hz abgestimmte, an sich bekannte Tiefpaßfilter, die insbesondere durch RC-Glieder gebildet sein können. Die Diskriminatorschaltungen 20, 21, 22 sind Spannungs-Nullpunktsdiskriminatoren gemäss der Detektorschaltung 7 in Fig. 1.

Den Diskriminatorschaltungen 20, 21, 22 sind, für jede Phase gesondert, Zeitstufen 32, 33, 34 gemäss der Zeitstufe 9 in Fig. 1 nachgeschaltet.

Diese Zeitstufen 32, 33, 34 sind einstellbare Zeitglieder, vorzugsweise an sich bekannte digitale Zeitrelais, mit welchen eine außerordentlich hohe Genauigkeit und geeichte Einstellbarkeit erzielbar ist. Die Einstellung kann dabei eventuell in zwei Stufen vorgesehen sein, nämlich einerseits 0, 10 oder 20 ms und anderseits von 0 bis 9 ms mit einer Stufung von 1 ms, so daß eine Verzögerung bis maximal 29 ms eingestellt werden kann. Dies entspricht den praktischen Anforderungen bei herkömmlichen Leistungsschaltern, deren Einschaltverzögerung erfahrungsgemäß zwischen 130 und 150 ms liegt, wodurch eine maximale Einstellbarkeit der Verzögerungszeit in der Grössenordnung von 20 bis 30 ms liegen kann. Betragen die gemessenen Ist-Verzögerungen eines Leistungsschalters in den drei Phasen z.B. 137 ms, 131 ms und 140 ms, werden die Zeitverzögerungen der einzelnen Zeitstufen von folgender Überlegung ausgehend festgelegt: Wenn eine Netzspannung von 50 Hz angenommen wird, so beträgt die Periodendauer 20 ms und es ist daher der Berechnung der Zeitverzögerungen ein ganzes Vielfaches von 20 ms zugrundezulegen. Soll im Spannungsmaximum eingeschaltet werden, bedeutet dies, daß entsprechend einer Viertelperiode (90°) vom Nulldurchgang bis zum Spannungsmaximum 5 ms hinzuzurechnen sind, womit sich die Beziehung $n \cdot 20$ ms + 5 ms ergibt. Im vorliegenden Beispiel mit der größten Ist-Verzögerung des Leistungsschalters von 140 ms ist daher n = 7 zu wählen, d.h. $7 \times 20$ ms + 5 ms = 145 ms. Ausgehend von diesem Wert wird für die erste Phase mit der Zeitstufe 32 eine Zeitverzögerung von 145 ms – 137 ms = 8 ms, für die zweite Phase eine Zeitverzögerung von 145 ms – 131 ms = 14 ms und für die dritte Phase eine Zeitverzögerung von 145 ms − 140 ms = 5 ms eingestellt. Dadurch wird erreicht, daß der Leistungsschalter in den einzelnen Phasen mit entsprechender Phasenversetzung von 120° zufolge der Ankopplung an die gesonderten Phasen L1, L2 und L3 jeweils zum Spannungsmaximum bzw. beim Stromnulldurchgang schaltet.

Diese individuelle Einstellmöglichkeit 35 der Zeitverzögerung der einzelnen Zeitstufen 32, 33, 34 ist in Fig. 2 schematisch angedeutet.

Bei anliegender Synchronisierspannung bzw. Sammelschienenspannung geben somit die Zeitstufen 32, 33, 34 konstant alle 20 ms (unter der Annahme einer Netzfrequenz von 50 Hz) Zündimpulse für die Thyristoren 17 der Torschaltungen 14, 15, 16 ab. Die Thyristoren 17 können nur dann zur Aufgabe des Leistungsschalter-Einschaltbefehlssignals zünden, wenn tatsächlich ein solches Eischaltbefehlssignal an der Leitung 13 anliegt. Dieses Eischaltbefehlssignal kann beispielsweise ein Gleichspannungs-Impuls mit einer Impulsdauer von 1 s sein. Um dabei zu verhindern, daß ein Thyristor zur Zündung nur einen Magerimpuls erhält, was dann der Fall sein kann, wenn der Zündimpuls gerade abfällt, wenn das Einschaltsignal auftritt, wird die Gateansteuerung für den jeweiligen Thyristor 17 mit Hilfe einer Impulsfreigabeschaltung 35, 36, 37 nur mit der Flanke des eintreffenden Einschaltbefehlssignals freigegeben. Dementsprechend kann im einfachsten Fall die jeweilige Impulsfreigabeschaltung durch eine UND-Gatterschaltung gebildet sein, der an einem Eingang die Zündimpulse der Zeitstufe 32, 33, 34 und an dem anderen Eingang das Einschaltbefehlssignal zugeführt werden. Über diese Impulsfreigabeschaltung 35, 36. 37 werden die jeweiligen Zündimpulse an die Steuerelektroden der Thyristoren 17 über Optokoppler 38, 39 bzw. 40 angelegt, welche zur galvanischen Trennung der Thyristoren vorgesehen sind. Dabei enthalten derartige Optokoppler in an sich herkömmlicher Weise eine lichtemittierende Diode (LED) sowie einen Fototransistor oder eine Fotodiode, der bzw. die das Licht der LED empfängt.

Die von den Zeitstufen 32, 33, 34 mit der vorgegebenen Wiederholfrequenz (z.B. 50 Hz entsprechend der Netzfrequenz von 50 Hz) abgegebenen Zündimpulse für die Thyristoren 17 können weiters zu Überwachungszwecken verwendet werden, um so die Gerätefunktion laufend zu kontrollieren. Eine entsprechende Überwachungseinheit 41 ist in Fig. 2 schematisch dargstellt.

Um auch ein Zuschalten des Leistungsschalters im spannungslosen Zustand zu ermöglichen, sowie als Sicherheitsvorrichtung für die gesamte Einrichtung, wird mit jedem ankommenden Leistungsschalter-Einschaltbefehlssignal ein Zeitrelais 42 angesteuert, das mit seinen Schaltkontakten den Torschaltungen 14, 15, 16 parallelgeschaltet ist und nach einer Ansprechverzögerung von beispielsweise 30 ms oder 50 ms das Einschaltbefehlssignal direkt an die Einschaltspulen 10, 11, 12 des Leistungsschalters weitergibt. Dieser im Vergleich zum herkömmlichen Einschalten maximal entstehende Zeitfehler stört auch nicht bei der Parallelschaltung eines Abzweiges über eine Synchronisiereinrichtung.

Beim bisher beschrieben Ausführungsbeispiel der Einrichtung wurde noch nicht berücksichtigt, daß bei induktiven Elementen, z.B. Transformatoren, ein remanenter Magnetismus vorliegt, und daß daher vorteilhafterweise der Einschaltzeitpunkt entsprechend der Lage der Remanenz bzw. Richtung des remanenten Flusses gewählt werden kann, wobei diese Polarität der Remanenz von der Zufälligkeit des vorangegangenen Abschaltvorganges abhängt. Bei der Einrichtung gemäß Fig. 2 ist eine schematisch dargestellte Schaltungsanordnung 43 zur Erfassung und Speicherung der Polarität der letzten Spannungs- bzw. Stromhalbwelle beim vorhergehenden Abschalten vorgesehen. Dabei ist eine Speicherschaltung 44 vorhanden, die durch drei bistabile Kippstufen 45, 46, 47, je eine pro Phase, gebildet ist. Diese bistabilen Kippstufen 45, 46, 47 sind je über eine Sicherung 48, 49, 50, einen Wandler 51, 52, 53 sowie einen Eingangsfilter 54, 55 bzw. 56, beispielsweise ein 50 Hz-RC-Tiefpaßfilter, an die mit Hilfe des Leistungsschalters einzuschaltende Abzweigspannung bzw. den Abzweigstrom L1, L2, L3 gekoppelt. Entsprechend dieser Schaltung kippt das Signal am Ausgang Q einer jeden Kippstufe 45, 46, 47 im Takt der jeweiligen Phasenspannung bzw. des jeweiligen Phasenstromes und beim Abschalten dieser Phase bleibt das Ausgangssignal Q entsprechend der letzten Spannungs- oder Stromhalbwelle stehen. Als Information über die Lage der Remanenz wird daher konstant entweder ein Logisch-HOCH-Signal oder ein Logisch-NIEDRIG-Signal erhalten, und dieses Signal wird gesondert für jede Phase an eine Auswahlschaltung 57, 58 bzw. 59 angelegt, die mit einem anderen Eingang an den jeweiligen Spannungsdiskriminator 20, 21 bzw. 22 angeschlossen ist. Je nach dem Wert des Signals Q am Steuer- oder Wähleingang einer jeden Auswahlschaltung 57, 58 bzw. 59 wird von dieser bei einem vom Diskriminator 20, 21 oder 22 erkannten Nulldurchgang mit ansteigender oder abfallender Flanke ausgangsseitig ein Impuls an die nachgeschaltete Zeitstufe 32, 33 bzw. 34 abgegeben, wo dieser um die eingestellte Zeit verzögert wird. Auf diese Weise wird eine Folge von Zündimpulsen erhalten, da bei jedem entsprechenden Nulldurchgang ein derartiger Impuls auftritt.

Diese Erfassung und Berücksichtigung der Remanenz ist im allgemeinen nur bei einem Transformatorleistungsschalter sinnvoll, wo über die jeweilige Auswahlschaltung entsprechend der Polarität der Remanenz das positive oder negative Spannungs-Nulldurchgangskriterium zur Weiterverarbeitung freigegeben wird. Bei allen anderen Netzelementen, die mit Hilfe des Leistungsschalters eingeschaltet werden sollen, ist eine Remanenzerfassung und -speicherung nicht erforderlich bzw. liegt gegebenenfalls kein remamenter Magnetismus vor, und für diesen Fall wird die Schaltungsanordnung außer Funktion gesetzt. Beispielsweise kann hiefür ein Trennschalter in der Verbindung zu den einzelnen Phasen des Abzweigstromes vorgesehen sein. Gekoppelt mit der Betätigung dieses Trennschalters wird von einer nicht näher dargestellten Signalquelle ein festes Signal als Ersatz für das Ausgangssignal Q der Kippstufen 45, 46, 47 an die Steuer- oder Wähleingänge der Auswahlschaltungen 57, 58, 59 angelegt.

Wird die an Hand der Fig. 2 erläuterte Einrichtung zum Schalten von Dreiphasen-Transformatoren verwendet, so kann es, wie bereits einleitend erwähnt, hier von Vorteil sein, als Einschaltzeitpunkte andere Zeitpunkte als im Spannungsmaximum bzw. Stromnulldurchgang zu wählen. Mit Hilfe der Zeitstufen 32, 33, 34 ist für jede Phase der optimale Zeitpunkt für die Zuschaltung einstellbar, in dem das jeweilige Einschaltbefehlssignal an die drei Phasen des Leistungsschalters abgegeben wird, um so Rückwirkungen auf das speisende Netz und Verbraucher auf ein Mindestmaß zu reduzieren. Um hier je nach Schaltgruppe und Sternpunktsbehandlung (z.B. starre Sternpunktserdung oder offener Sternpunkt) den optimalen Einschaltzeitpunkt manuell einstellen zu können, ist eine Eingabeeinheit 60 vorgesehen, die über eine Anpassungsstufe 61 mit drei Ausgängen mit Stelleingängen der Zeitstufen 32, 33 bzw. 34 verbunden ist. Damit ist es beispielsweise möglich, im Fall einer starren Verbindung der Sternpunkte von Netz und Transformator (starre Sternpunktserdung) die erste Phase L1 zum Zeitpunkt des Spannungsmaximums an das Netz anzuschalten, und die beiden anderen Phasen L2 und L3 gleichzeitig genau eine Viertelperiode (5 ms) später. Dies stellt einen Unterschied zum vorherigen Zahlenbeispiel dar, bei dem phasenweise jeweils im Stromnulldurchgang geschaltet wird, was bedeutet, daß die zweite Phase 6,67 ms nach der ersten Phase und die dritte Phase wieder 6,67 ms später geschaltet werden. Im Fall eines offenen Sternpunkts hat sich als optimal erwiesen, zuerst die zwei Phasen, z.B. L1 und L2, zum Zeitpunkt des Spannungsmaximums der zwischen ihnen liegenden verketteten Spannung zuzuschalten, während die dritte Phase z.B. L3, genau eine Viertelperiode (5 ms) danach geschaltet wird.

In Abwandlung der Einrichtung gemäß Fig. 2 ist es möglich, nur einen Spannungsdiskriminator, z.B. den Spannungsdiskriminator 20, an die als Meßspannung verwendete Synchronisierspannung bzw. Sammelschienenspannung anzuschließen und die beiden anderen Diskriminatorschaltungen samt vorgeschalteten Kreisen wegzulassen. Ebenso ist dann, sofern eine Remanenzberücksichtigung erfolgen soll, nur eine Auswahlschaltung mit dem Ausgang dieses einzigen Spannungsdiskriminators 20 zu koppeln, jedoch sind für das phasenweise versetzte Schalten alle drei dargestellten Zeitstufen 32, 33, 34 erforderlich, die somit an den Ausgang der Auswahlschaltung 57 bzw. des Spannungsdiskriminators 20 parallel anzuschließen wären. In den Zeitstufen 32, 33, 34 wäre dann im Hinblick auf das phasenweise versetzte Schalten eine zusätzliche Verzögerung entsprechend dem Phasenunterschied zwischen den Phasen einzustellen, also etwa bei der Zeitstufe 33 eine zusätzliche Zeitverzögerung von 6,67 ms entsprechend 120° Phasenverschiebung, und an der Zeitstufe 34 2 · 6,67 ms. Eine solche Schaltungsvereinfachung ist dann jedenfalls möglich, wenn davon ausgegangen werden kann, daß die Netzfrequenz nur geringen Schwankungen unterliegt, so daß durch die vorgenannten fest eingestellten zusätzlichen Verzögerungszeiten im Vergleich zu der tatsächlichen Netzfrequenz keine wesentlichen Schaltfehler bewirkt werden. Beispielsweise beträgt bei einer Ist-Frequenz von 49,9 Hz anstatt 50 Hz der Fehler 40 µs pro Periode, d.h. bei einer Leistungsschalter-Einschaltverzögerung von ungefähr 130 ms weniger als 0,3 ms. Ein derartiger Fehler ist im allgemeinen vernachlässigbar.

In Fig. 2 ist noch eine Anordnung zur Stromversorgung der Einrichtung schematisch angedeutet, wobei von einer 220 V - Gleichspannungsquelle 62 über einen zweipoligen Geräteschalter 63 die Versorgungsspannung an einem Ausgang 64 mit Hilfe eines Gleichstromwandlers 65 abgeleitet wird.

Die Funktionsweise der beschriebenen Einrichtung ist somit derart, daß die dreiphasige Sammelschienenspannung oder Synchronisierspannung des zuzuschaltenden Abzweiges über die Eingangswandler 26, 27, 28 und Eingangsfilter 23, 24, 25, die insbesondere etwaige Oberwellen ausfiltern sollen, phasenweise dem jeweiligen Nullpunktsdiskriminator 20, 21, 22 zugeführt wird, der exakt den Nulldurchgang der Spannung in beiden Richtungen erfaßt. Vom Abzweigwandler her wird über die bistabilen Kippstufen 45, 46, 47 die Richtung der Remanenz beim letzten Abschaltvorgang erfaßt und ein entsprechendes Steuersignal zur selektiven Durchschaltung der Diskriminatorimpulse an die Auswahlschaltungen 57, 58, 59 abgegeben. Die so erhaltenen Impulse werden phasenweise in dem entsprechenden Zeitstufen 32, 33, 34 für die Erreichung des jeweiligen optimalen Einschalzeitpunktes verzögert und über die Impulsfreigabeschaltungen 35, 36, 37 den galvanisch entkoppelten Thyristoren gateseitig zugeführt. Diese Zündimpulse treten an den Ausgängen der Zeitstufen 32, 33, 34, phasenweise versetzt, konstant alle 20 ms auf. Zufolge der Impulsfreigabeschaltung 35, 36, 37 können die Thyristoren jedoch nur dann zünden und die Einschaltsignale somit an die Einschaltspulen 10, 11, 12 des Leistungsschalters gelangen, wenn tatsächlich an der Leitung 13 ein Einschaltkommando ansteht. Sollte etwa zufolge eines Bauteildefektes, z.B. wenn ein Thyristor durch einen außenliegenden Fehler durchlegiert, oder aber bei einem Ausfall der Versorgungsspannung die beschriebene Einrichtung ausfallen, so hat dies keine nachteiligen Auswirkungen. In diesem Fall wird über das Zeitrelais 42 so wie bisher, also ohne Optimierung, zugeschaltet. Im schlimmsten Fall unterbleibt das Einschaltkommando oder es wird nicht allpolig erteilt, was durch die herkömmliche Polnachholung beseitig wird.

Durch die gerinfügige Versetzung der Einschaltbefehle (bei 50 Hz im allgemeinen Fall maximal 6,67 ms zueinander) und die phasenweise Erfassung des Anregekriteriums (Synchronisierspannung bzw. Sammelschienenspannung als Meßspannung) durch den Diskriminator kann es auch nicht zu unerwünschten Schutzauslösungen kommen. Anderseits ist von Vorteil, daß durch die Einrichtung strommäßige Rückwirkungen auf das Netz beim Einschalten von induktiven oder kapazitiven Lasten minimiert werden, wobei durch die phasenweise Verzögerung und Versetzung der Einschaltbefehlssignale für die Spulen des Leistungsschalters der jeweilige optimale Zeitpunkt für kleinste Einschaltströme erreicht wird. Darüberhinaus wird die Richtung der Remanenz, falls erforderlich, im Zuschaltaugenblick berücksichtigt.

Durch die Vermeidung von Sättigungserscheinungen wird die Spannungsverzerrung durch den Einschaltrush stark vermindert und dadurch die Rückwirkung auf andere Verbraucher und Einspeisequellen reduziert.

Im allgemeinen ist es nicht erforderlich, Abschaltbefehlssignale in entsprechender Weise, ähnlich den Einschaltbefehlssignalen, phasenweise zu versetzen, da der Abschaltvorgang z.B. beim Dreiperioden-Leistungsschalter auch in zwei oder zweieinhalb Perioden erfolgen kann. Grundsätzlich erfolgt das Abschalten eines induktiven Verbraucherstromes immer durch Abreißen des Stromes unmittelbar vor oder beim Nulldurchgang des Stromes. Um im Fall von induktiven Komponenten mit Eisenkern, also mit Remanenz, die Richtung der Remanenz zu erfassen, reicht es aus, wenn wie beschrieben die Halbwellen der Spannung oder besser des Stromes des Abzweiges überwacht werden und die Polarität der letzten Halbwelle vor dem Abreißen des Stromes gespeichert wird. Je nach Polarität erfolgt dann, wie ebenfalls vorstehend beschrieben, eine neuerliche Zuschaltung in der Weise, daß der remanente Fluß die gleiche Richtung aufweist wie die durch den Zuschaltaugenblick phasenweise gewählte erste Halbwelle des Magnetwechselflusses.

In Fig. 3 ist in einem Blockschaltbild eine Einrichtung gezeichnet, bei der einerseits eine Einschaltsteuerung ähnlich jener bei der Vorrichtung gemäss Fig. 2, anderseits eine zusätzliche Ausschaltsteuerung vorhanden ist. Hinsichtlich der dreipoligen Leistungsschalter-Einschaltsteuerung entspricht die Einrichtung gemäß Fig. 3 weitgehend jener gemäß Fig. 2, so daß für einander entsprechende Bauelemente dieselben Bezugszeichen verwendet wurden. Anders als bei der Einrichtung gemäß Fig. 2 ist gemäß Fig. 3 aber nur eine Detektorschaltung in Form eines Spannungs-Nullpunktsdiskriminators 20 vorhanden, der über einen Eingangsfilter 23, einen Eingangswandler 26 und eine Sicherung 29 an eine der Phasen, etwa die Phase L1 der Sammelschienenspannung oder Synchronisierspannung, die auch hier als Meßspannung verwendet wird, angekoppelt ist. Diesem Spannungs-Nullpunktsdiskriminator 20 sind drei Zeitstufen 32, 33, 34 mit Einstellmöglichkeit von 0 bis 29 ms, je eine für eine Phase, nachgeschaltet. Diese drei Zeitstufen 32, 33 und 34 dienen wiederum der Anpassung und Korrektur der Leistungsschalter-Einschaltverzögerung sowie gegebenenfalls auch der Korrektur der Laufzeiten in der Einrichtung selbst und zur Berücksichtigung der Verzögerung von 5 ms (bei einer Netzfrequenz von 50 Hz) vom Spannungsnulldurchgang bis zum ersten Spannungsmaximum, wie dies vorstehend bereits an Hand der Fig. 2 erläutert worden ist. Ähnlich wie in Fig. 2 erfolgt auch hier erst bei Vorliegen eines definierten Einschaltbefehlssignals an der Leitung 13 eine Impulsfreigabe, um Prellwirkungen in der Kontaktgabe auszuschalten. Dabei wird dieses Einschaltbefehlssignal über eine Anpassungs-Filter-Zeitverzögerungsstufe 66, beispielsweise mit einer Zeitverzögerung von 5 ms, den für jede Phase vorgesehenen Zündimpulsfreigabeschaltungen 35, 36, 37, die beispielsweise durch monostabile Kippstufen mit einem Gatter (Einschaltbefehlssignal) und einem flankengetriggerten Eingang zur Impulsauslösung gebildet sind, zugeführt. Diese monostabilen Kippstufen sind mit ihren flankengetriggerten Eingängen an die Zeitstufen 32, 33, 34 angeschlossen. Weiters sind wiederum Optokoppler 38, 39, 40 zur galvanischen Trennung der Thyristoren 17 der Torschaltungen 14, 15, 16 in den Einschaltbefehlssignalwegen zu den Einschaltspulen 10, 11, 12 des nicht dargestellten Leistungsschalters vorgesehen. Ähnlich wie in Fig. 1 ist schließlich auch ein Zeitrelais 42, beispielsweise mit einer Ansprechverzögerung von 50 ms, mit seinen Einschaltkontakten den Torschaltungen 14, 15 und 16 parallelgeschaltet, um bei einem etwaigen Ausfall der Einrichtung als Überbrückungsrelais ohne Hilfsspannung die Einschaltung in herkömmlicher Weise zu bewirken.

Die Auswahlschaltung 57 hat hier entsprechend den drei zu schaltenden Phasen drei Eingänge bzw. drei Signalwege, so daß sie in ihrer Funktion grundsätzlich den drei Auswahlschaltungen 57, 58, 59 gemäß Fig. 2 zusammen entspricht. Für die zweite und dritte Phase sind den entsprechenden Eingängen dieser Auswahlschaltung 57 gemäss Fig. 3 fest eingestellte Zeitstufen 67 bzw. 68 vorgeschaltet, um die entsprechenden Zeitverzögerungen für die jeweilige Phase (z.B. 1 · 6,67 ms bzw. 2 · 6,67 ms bei einer Netzfrequenz von 50 Hz) vorzusehen.

Die Auswahlschaltung 57 besteht beispielsweise aus UND-Gliedern mit fest eingestellten Zeitstufen, wobei die Auswahl der Fixzeiten am Punkt 69 durch externe Signale entsprechend der Stellung des Sternpunkttrenners oder durch interne Handvorgabe über eine Anpassungs-Filter-Einheit 70 erfolgt.

Dabei können beispielsweise folgende Zeitverzögerungen am Ausgang eingestellt werden:

| Auswahlschaltung | Verzögerung am Ausgang | | |
| --- | --- | --- | --- |
| | 1. Phase | 2. Phase | 3. Phase |
| gleichzeitiges Schalten | 0 | 0 | 0 |
| Trafo Sternpunkt frei | 3,3 ms | 3,3 ms | 8,3 ms |
| Trafo Sternpunkt geerdet | 0 | 5 ms | 5 ms |

Um nach erfolgter Einschaltung die Transformatoren od. dgl. Lasten wieder zu einem definierten Zeitpunkt, mit immer der gleichen Lage der Remanenz, abzuschalten, wird gemäss Fig. 3 das Ausschaltbefehlssignal ähnlich dem Einschaltbefehlssignal zeitlich gesteuert, wobei beim Ausführungsbeispiel gemäss Fig. 3 ein gleichzeitiges Abschalten aller drei Phasen bei einem Handbefehl vorgesehen ist. Da aus Sicherheitsgründen die Ausschaltung normalerweise stets mit zwei unabhängigen Spannungen über zwei Ausschaltspulen erfolgt, muß in beide in Fig. 3 angedeuteten Kreise I, II eingegriffen werden. Dazu ist in jedem Ausschaltsignalweg eine Torschaltung 71 bzw. 72 vorgesehen, die ähnlich wie die in den Einschaltsignalwegen vorgesehenen Torschaltungen 14, 15, 16 durch einen Thyristor 73 gebildet sind, dessen Anoden-Kathodenstrecke durch die Serienschaltung eines Kondensators 74 und eines Widerstandes 75 überbrückt ist. Zur galvanischen Trennung der Thyristoren 73 der beiden Torschaltungen 71, 72 sind sodann wiederum Optokoppler 76 bzw. 77 vorgesehen, die in Parallelschaltung an den Ausgang einer Impulsfreigabeschaltung 78 angeschlossen sind. Diese Impulsfreigabeschaltung 78 ist beispielsweise ebenfalls durch eine monostabile Kippstufe gebildet, der über ein Anpassungs-Filter-Verzögerungsglied 79 mit einer Zeitverzögerung von 5 ms das Ausschaltbefehlssignal zugeführt wird. Am flankenbetriggerten Eingang erhält die monostabile Kippstufe 78 über eine frei einstellbare Zeitstufe 80 außerdem die Ausgangsimpulse des Spannungs-Nullpunktsdiskriminators 20 zugeführt. Diese Ausführung mit einer Zeitstufe 80 und einer Impulsfreigabeschaltung 78 ist deshalb möglich, da einerseits ein gleichzeitiges Abschalten aller drei Phasen über die beiden Kreise I und II erfolgen kann, und anderseits zur ordnungsgemäßen Funktion für die Impulsfreigabe das Vorhandensein des Ausschaltbefehls in einem Kreis, beispielsweise dem Kreis I, ausreicht.

Mit der Zeitstufe 80 wird auch hier eine Zeitverzögerung unter Berücksichtigung der Ist-Ausschaltverzögerung des Leistungsschalters eingestellt, um immer die gleiche Lage der Remanenz zu erzielen. Die Funktionsweise ist dabei im übrigen ähnlich jener bei der Einschaltsteuerung, wie sie bereits ausführlich erläutert worden ist, so daß sich eine neuerliche Beschreibung derselben erübrigt.

Der Vollständigkeit halber sei noch erwähnt, daß bei der Einrichtung gemäß Fig. 3 im Bereich der Ausschaltsteuerung für jeden Kreis I, II ebenfalls eine Überbrückung der jeweiligen Torschaltung 71 bzw. 72 durch ein Zeitrelais 81 bzw. 82, beispielsweise ebenfalls mit einer Ansprechverzögerung von 50 ms, vorgesehen ist.

Aus Vorstehendem ist ersichtlich, daß mit der beschriebenen Einrichtung immer ein optimaler Zeitpunkt für ein — gegebenenfalls phasenweises — Ein- oder Ausschalten erreicht werden kann. Dabei können insbesondere auch von Schaltern variierende Schaltverzögerungen der Leistungsschalter (phasenweise) berücksichtigt werden. Alterungserscheinungen und Temperatureinflüsse können durch Kontrollen relativ leicht korrigiert werden, indem entweder zuerst nur die Wandlergruppe bespannt wird und damit das Einschaltverhalten des Leistungsschalters phasenweise auf einem fest eingebauten oder transportablen Schreiber (Störschreiber, Oszillograph usw.) kontrolliert wird. Bei Elementen, die öfter geschaltet werden, kann durch derartige regelmäßige Kontrollen des Einschaltverhaltens eine Korrektur der Zeitverzögerung, falls erforderlich, an den einstellbaren Zeitstufen vorgenommen werden.

**Patentansprüche**

1. Einrichtung zum gesteuerten Ein- und/oder Ausschalten von induktiven und/oder kapazitiven Elementen (2) im Wechselspannungsnetz hoher Spannung zum Minimieren von Netzrückwirkungen, bei der einem Ein- oder Mehrphasen- Leistungsschalter (1; 10, 11, 12) über eine Torschaltung (5) und eine von der wechselförmigen Hochspannung gesteuerte Detektorschaltung (7; 20, 21, 22) ein Schaltsignal zugeführt wird, wobei in jedem Schaltsignalweg zum Leistungsschalter (1; 10, 11, 12) eine Torschaltung (5) vorgesehen ist, dadurch gekennzeichnet, daß jede Torschaltung (5; 14, 15, 16; 71, 72) durch einen Thyristor (17; 73) gebildet ist, dessen Gateelektrode an je eine mit der Detektorschaltung (7; 20, 21, 22) verbundene, zur individuellen Festlegung eines ausgewählten Schaltzeitpunktes einstellbare Zeitstufe (9; 32, 33, 34; 80) angeschlossen ist.

2. Einrichtung nach Anspruch 1, dadurch gekennzeichnet, daß zwischen jeder einstellbaren Zeitstufe (9; 32, 33, 34; 80) und zugeordnetem Thyristor (17; 73) eine Zündimpulsfreigabeschaltung (35, 36, 37; 78), vorzugsweise eine Gatterschaltung oder eine Kippstufe, vorgesehen ist, der an einem Steuereingang das Schaltsignal, insbesondere mit Zeitverzögerung (66; 78), zuführbar ist.

3. Einrichtung nach einem der Ansprüche 1 oder 2, dadurch gekennzeichnet, daß alle Torschaltungen (5; 14, 14, 16; 71, 72) durch ein Zeitrelais (42; 81, 82) überbrückt sind, dessen Ansprechverzögerung größer ist, als die Zeitverzögerung der einstellbaren Zeitstufen (9; 32, 33, 34; 80).

4. Einrichtung nach einem der Ansprüche 1 bis 3, dadurch gekennzeichnet, daß die mit der wechselförmigen Hochspannung oder einer synchronen Meßspannung gekoppelte Detektorschaltung (7; 20, 21, 22) durch einen Spannungs-Nullpunktsdiskriminator gebildet ist.

5. Einrichtung nach Anspruch 4, dadurch gekennzeichnet, daß dem Spannungs-Nullpunktsdiskriminator (20, 21, 22) eine Auswahlschaltung (57, 58, 59) zur selektiven Durchschaltung von Diskriminatorimpulsen bei einem Spannungs-Nulldurchgang mit ansteigender oder abfallender Flanke nachgeschaltet ist.

6. Einrichtung nach Anspruch 4 oder 5, für Mehrphasensysteme, dadurch gekennzeichnet, daß nur ein Spannungs-Nullpunktsdiskriminator (20) vorgesehen ist, der mit einer Phase (L1) koppelbar ist, und dem fest eingestellte Zeitstufen (67, 68) entsprechend den weiteren Phasen nachgeschaltet sind, wogegen für jede Phase eine Torschaltung (14, 15, 16) mit zugehöriger frei einstellbarer Zeitstufe (32, 33, 34) vorgesehen ist.

7. Einrichtung nach einem der Ansprüche 1 bis 6, zum Einschalten von Dreiphasen-Transformatoren mit starrer Sternpunktserdung unter Minimierung des Einschaltstromstoßes, dadurch gekennzeichnet, daß mit den einstellbaren Zeitstufen (32, 33, 34) der gemeinsame Schaltzeitpunkt für zwei Phasen (L2, L3) eine Viertelperiode der Wechselspannungsfrequenz nach dem Schaltzeitpunkt der ersten Phase (L1) festgelegt ist, welcher seinerseits mit dem Zeitpunkt des Spannungsmaximums zusammenfallend gewählt ist.

8. Einrichtung nach einem der Ansprüche 1 bis 6, zum Einschalten von Dreiphasen-Transformatoren mit offenem Sternpunkt unter Minimierung des Einschaltstromstoßes, dadurch gekennzeichnet, daß mit den einstellbaren Zeitstufen (32, 33, 34) der gemeinsame Schaltzeitpunkt für zwei Phasen (L1, L2) mit dem Zeitpunkt des Spannungsmaximums der zwischen diesen Phasen liegenden verketteten Spannung zusammenfallend festgelegt ist, wogegen der Schaltzeitpunkt für die dritte Phase (L3) eine Viertelperiode der Wechselspannungsfrequenz nach dem gemeinsamen Schaltzeitpunkt der ersten zwei Phasen (L1, L2) festgelegt ist.

**Claims**

1. Device for the controlled switching-on and/or switching-off of inductive and/or capacitive elements (2) in a high-voltage alternating-voltage power er system for minimizing the effects on the power system, in which a switching signal is supplied to a single- or multi-phase circuit breaker (1; 10, 11, 12) via a gate circuit (5) and a detector circuit (7; 20, 21, 22) controlled by the alternating-type high voltage, a gate circuit (5) being provided in each switching signal path to the circuit breaker (1; 10, 11, 12), characterised in that each gate circuit (5; 14, 15, 16; 71, 72) is formed by a thyristor (17; 73), the gate electrode of which is connected to one timing stage (9; 32, 33, 34; 80) each which is connected to the detector circuit (7; 20, 21, 22) and which is adjustable for individually establishing a selected switching time.

2. Device according to Claim 1, characterised in that, between each adjustable timing stage (9; 32, 33, 34; 80) and asociated thyristor (17; 73), a trigger pulse enable circuit (35, 36, 37; 78), preferably a gate circuit or a flip-flop stage, is provided which can be supplied at one control input with the switching signal, particularly with time delay (66; 79).

3. Device according to one of Claims 1 or 2, characterised in that all gate circuits (5; 14, 15, 16; 71, 72) are bypassed by a timing relay (42; 81, 82), the operating delay of which is greater than the time delay of the adjustable timing stages (9; 32, 33, 34; 80).

4. Device according to one of Claims 1 to 3, characterised in that the detector circuit (7; 20, 21, 22) coupled to the alternating-type high voltage or a synchronous measurement voltage is formed by a voltage zero discriminator.

5. Device according to Claim 4, characterised in that the voltage zero discriminator (20, 21, 22) is followed by a selection circuit (57, 58, 59) for the selective switching-through of discriminator pulses at a voltage zero transition with rising or falling slope.

6. Device according to Claim 4 or 5, for multiphase systems, characterised in that only one voltage zero discriminator (20) is provided which can be coupled to one phase (L1) and which is followed by permanently set timing stages (67, 68) corresponding to the other phases, whereas one gate circuit (14, 15, 16) with associated freely adjustable timing stage (32, 33, 34) is provided for each phase.

7. Device according to one of Claims 1 to 6, for the switching-on of three-phase transformators with rigid neutralpoint earthing and with minimisation of the inrush current surge, characterised in that the common switching time for two phases (L2, L3) is established by means of the adjustable timing stages (32, 33, 34) one quarter period of the alternating-voltage frequency after the switching time of the first phase (L1) which, in turn, is selected as being coincident with the time of the voltage peak.

8. Device according to one of Claims 1 to 6, for the switching-on of three-phase transformers with open neutralpoint and with minimisation of the inrush current surge, characterised in that the common switching time for two phases (L1, L2) is established by means of the adjustable timing stages (32, 33, 34) as being coincident with the time of the voltage peak of the phase-to-phase voltage between these phases, whereas the switching time for the third phase (L3) is established one quarter period of the alternating-voltage frequency after the common switching time of the first two phases (L1, L2).

**Revendications**

1. Dispositif pour minimiser des réactions sur un réseau alternatif haute tension lors d'une commutation commandée d'éléments inductifs et/ou capacitifs (2), dans lequel un signal de commutation est appliqué à un commutateur de puissance mono- ou multiphase (1; 10, 11, 12) à travers un circuit de porte (5) et un circuit de détection commandé par la haute tension alternative (7; 20, 21, 22), un circuit de porte (5) étant prévu dans une voie de signal de commutation vers le commutateur à puissance (1; 10, 11, 13), caractérisé en ce que chaque circuit de porte (5; 14, 15, 16; 71, 72) est constitué par un thyristor (17; 73), dont la gâchette est reliée respectivement à un étage à retard ajustable (9; 32, 33, 34; 80), connecté audit circuit de détection (7; 20, 21, 22) et sert à la définition individuelle d'un instant de commutation sélectionné.

2. Dispositif selon la revendication 1, caractérisé en ce qu'on prévoit entre chaque étage à retard ajustable (9; 32, 33, 34; 80) et le thyristor associé (17; 73) un circuit d'autorisation de l'impulsion d'amorçage (35, 36, 37; 78), de préférence un circuit à portes ou un bistable pouvant recevoir sur une entrée de commande le signal de commutation, en particulier associé à un retard (66; 79).

3. Dispsitif selon l'une des revendications 1 ou 2, caractérisé en ce que tous les circuits de porte (5; 14, 15, 16; 71, 72) sont associés en by-pass à un relais de retard (42; 81, 82) dont le retard à l'excitation est plus grand que le retard de l'étage à retard ajustable (9; 32, 33, 34; 80).

4. Dispositif selon l'une des revendications 1 à 3, caractérisé en ce que le circuit de détection (7; 20, 21, 22) accouplé à la haute tension alternative ou à une tension de mesure synchrone est constitué par un discriminateur de tension zéro.

5. Dispositif selon la revendication 4, caractérisé en ce que le discriminateur de tension zéro (20, 21, 22) est suivi d'un circuit de sélection (57, 58, 59) pour la transmission sélective d'impulsions de discrimination lors d'un passage de la tension par zéro ayant un flanc montant ou descendant.

6. Dispositif selon la revendication 4 ou 5 pour un système multiphase, caractérisé en ce qu'on prévoit un discriminateur de tension à temps zéro (20) unique, qui peut être accouplé à une phase (L1) et qui est suivi d'étages à retard ajustés de manière fixe (67, 68) en correspondance avec les autres phases, alors qu'un circuit de porte (14, 15, 16) est prévu pour chaque phase, et un étage à retard ajustable de façon libre.

7. Dispositif selon une des revendications 1 à 6, pour enclencher un transformateur triphasé à point d'étoile fixe mis à la terre, en minimisant l'à-coup de courant d'enclenchement, caractérisé en ce que l'instant d'enclenchement commun pour deux phases (L2, L3) est déterminé à l'aide des étages à retard ajustable (32, 33, 34), cet instant étant défini à un quart de période de la fréquence de tension alternative après l'instant d'enclenchement de la première phase (L1), ce dernier instant étant choisi pour coïncider avec le maximum de la tension.

8. Dispositif selon l'une des revendications 1 à 6, pour enclencher un transformateur triphasé à point d'étoile ouvert, en minimisant l'à-coup de courant d'enclenchement, caractérisé en ce que l'instant d'enclenchement commun pour deux phases (L1, L2) est déterminé à l'aide d'étages à retard ajustable (32, 33, 34) de façon à coïncider avec l'instant du maximum de la tension enchaînée existant entre ces phases, alors que l'instant d'enclenchement de la troisième phase (L3) est déterminé comme étant un quart de période de la fréquence de la tension alternative après l'instant d'enclenchement commun des deux premières phases (L1, L2).

FIG. 2

FIG. 3

FIG. 1